# DEMANDE DE BREVET EUROPEEN

(11) **EP 0 805 283 A1**
(43) Date de publication de la demande: **05.11.1997**
(21) Numéro de dépôt: 97104808.7
(22) Date de dépôt: 20.03.1997
(51) Int. Cl.: F16B 33/00

(54) **Piéce vissante munie d'un joint solidaire**

(30) Priorité: 03.05.1996 FR 9605570
(71) Demandeur: SIEMENS AUTOMOTIVE S.A., 31036 Toulouse Cédex (FR)
(72) Inventeur: Castaing, Jean-Christophe, 31000 Toulouse (FR); Pesquera, Gil, 31500 Toulouse (FR); Barrabes, Patrick, 31130 Balma (FR)
(74) Mandataire: Fuchs, Franz-Josef, Dr.-Ing.

(57) **Abrégé**

Le joint assure l'étanchéité d'un trou fileté (5) percé dans une paroi (6) recevant une pièce vissante. La pièce comprend a) une bague (1) comportant un filetage (3) extérieur complémentaire de celui du trou (5) et b) un surmoulage (2) enrobant la bague (1) intérieurement et extérieurement en dehors du filetage (3), le surmoulage (2) présentant, dans un plan perpendiculaire à l'axe du filetage, une surface annulaire (2') agencée pour s'appliquer sous pression contre ladite paroi (6), autour du débouché du trou (5), après vissage de la pièce dans ce trou, de manière à obturer tout chemin de fuite à travers le trou.

Application à un capteur de température de fluide monté sur la paroi d'un réservoir de ce fluide.

## Description

La présente invention est relative à une pièce vissante et, plus particulièrement, à une telle pièce munie d'un joint solidaire assurant l'étanchéité d'un trou fileté percé dans une paroi recevant ladite pièce.

On place de telles pièces dans la paroi d'une enceinte enfermant un fluide dont on surveille, par exemple, la pression ou la température. Dans ce cas la pièce porte un capteur de la grandeur à mesurer, ce capteur baignant dans le fluide et délivrant un signal recueilli du côté de la paroi qui est opposé à celui qui est baigné par le fluide. Pour éviter que celui-ci ne s'échappe par le trou fileté dans lequel est vissée la pièce, on dispose classiquement sur celle-ci un joint d'étanchéité en une matière relativement tendre, qui s'écrase sur la paroi de l'enceinte, autour du trou, lors du vissage de la pièce dans ce trou. On connaît à cet égard divers types de joints imperdables conçus de manière à ne pas se séparer accidentellement de la pièce, avant ou lors de son montage dans le trou fileté. Ces joints peuvent prendre la forme d'une rondelle maintenue par pré-déformation dans une gorge de la pièce, ou d'une enduction du filetage de la pièce avec une matière d'étanchéité. La première de ces solutions présente l'inconvénient d'être coûteuse du fait de la nécessité de pré-déformer la rondelle suivant une forme compliquée. La deuxième solution souffre du même inconvénient, du fait du coût de la matière d'étanchéité, et de l'inconvénient supplémentaire de devoir être précisément dosée sur le filetage à étanchéifier.

La présente invention a donc pour but de réaliser une pièce vissante munie d'un joint solidaire imperdable assurant l'étanchéité du trou fileté percé dans une paroi recevant ladite pièce, qui soit de réalisation peu coûteuse.

La présente invention a aussi pour but de réaliser une telle pièce assurant une parfaite étanchéité de la paroi, même lorsque des chemins de fuite autres que le filetage lui-même existent dans cette pièce.

On atteint ces buts de l'invention ainsi que d'autres qui apparaîtront à la lecture de la description qui va suivre, avec une pièce vissante munie d'un joint solidaire assurant l'étanchéité d'un trou fileté percé dans une paroi recevant ladite pièce, cette pièce étant remarquable en ce qu'elle comprend a) une bague comportant un filetage extérieur complémentaire de celui du trou et b) un surmoulage enrobant la bague intérieurement et extérieurement en dehors du filetage, le surmoulage présentant, dans un plan perpendiculaire à l'axe du filetage, une surface annulaire agencée pour s'appliquer sous pression contre ladite paroi, autour du débouché du trou, après vissage de la pièce dans ce trou, de manière à obturer tout chemin de fuite à travers le trou.

L'intégration d'un joint d'étanchéité à la pièce par simple surmoulage d'une matière adaptée est particulièrement peu coûteuse, et assure l'inséparabilité du joint et de la pièce. En outre, comme on le verra plus loin, la position des surfaces annulaires en regard assurant l'étanchéité du trou permet d'obturer tous les chemins de fuite à travers le trou, y compris ceux existant dans la pièce elle-même.

D'autres caractéristiques et avantages de la présente invention apparaîtront à la lecture de la description qui va suivre et à l'examen du dessin annexe dans lequel :
- la figure 1 est un schéma partiel, en coupe axiale, d'une pièce suivant l'invention,
- la figure 2 est un schéma similaire à celui de la figure 1, représentant une variante de la pièce représentée à cette figure,
- la figure 3 est un schéma en coupe axiale d'une pièce suivant l'invention, prenant la forme d'un capteur de température, et
- les figures 4 et 5 sont une vue en élévation et en coupe axiale, respectivement, d'une pièce suivant l'invention, prenant la forme d'un bouchon de vidange pour réservoir d'huile de véhicule automobile.

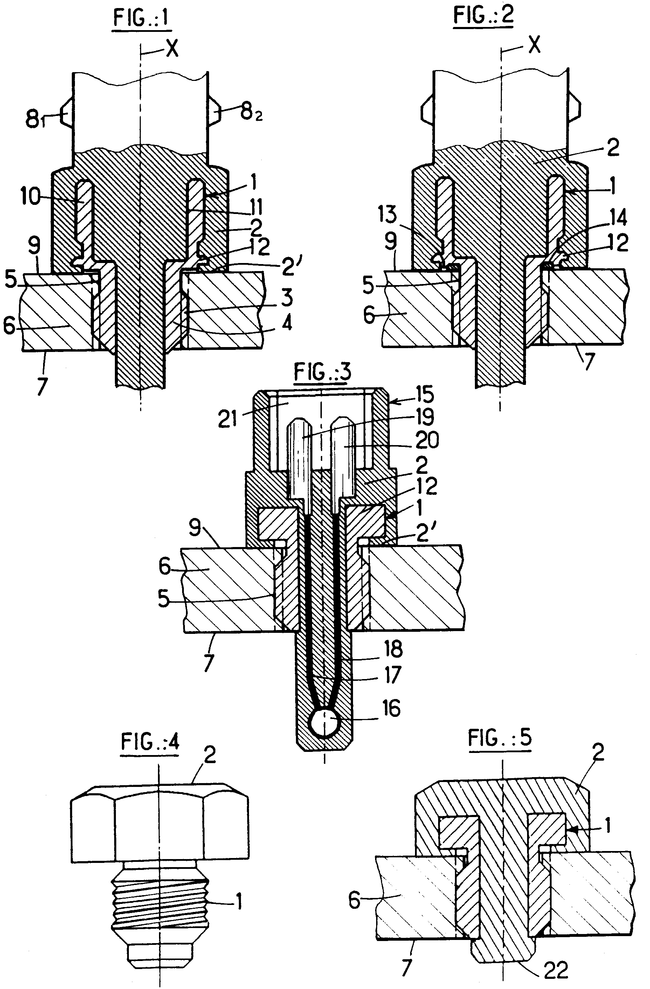

On se réfère à la figure 1 du dessin annexé où la pièce partiellement représentée comprend essentiellement une bague 1 et un surmoulage ou enrobage 2 qui remplit l'intérieur de la bague et recouvre sa surface extérieure, sauf au niveau d'un filetage 3 prévu sur une partie 4 de cette surface extérieure. Cette partie 4 est conformée pour pouvoir être vissée dans un trou fileté 5 complémentaire percé dans une paroi 6 délimitant, par exemple, une enceinte (non représentée) contenant un fluide du côté de la face 7 de cette paroi. Des oreilles 8₁, 8₂ permettent d'agripper le surmoulage 2 pour visser la pièce (1, 2) dans le trou 4.

A la fin du vissage, une surface annulaire 2' du surmoulage 2 située dans un plan perpendiculaire à l'axe X de la pièce, vient s'appliquer sous pression sur la face 9 de la paroi 6, opposée à la face 7. On choisit pour le surmoulage 2 une matière relativement tendre de manière que la surface 2' s'écrase légèrement sous une pression axiale en se moulant sur la face 9 de la paroi 6, autour du débouché du trou 5, les deux surfaces en contact du surmoulage 2 et de cette paroi obturant ainsi efficacement tout chemin de fuite du fluide contenu dans l'enceinte du côté de la face 7 de la paroi 6.

De nombreux matériaux bien connus peuvent être utilisés pour constituer la bague 1 et le surmoulage 2. Par exemple, on peut réaliser la bague 1 en un métal alors que le surmoulage 2 est réalisé en une matière plastique telle que le PA 66 éventuellement chargé de 30 % de fibres de verre, un polyurétane, un polyéthylène ou un polypropylène par exemple, qui peut être aisément surmoulée sur la bague 1. Cette dernière comprend à cet effet une partie 10 adjacente axialement à la partie filetée 4, la partie 10 présentant avantageusement une section transversale non circulaire pour renforcer le couplage de la bague et de l'enrobage, mis en jeu lors du vissage de la pièce suivant l'invention dans le trou 5.

Suivant une caractéristique avantageuse de la présente invention, le joint étanche constitué par la surface 2' du surmoulage 2 et sa surface d'appui sur la face 9 en regard de la paroi 6, obture aussi bien un chemin de fuite passant entre les filetages complémentaires du trou 5 et de la bague 1, qu'un chemin de fuite passant entre la bague 1 et le surmoulage 2, à leur interface 11 qui traverse elle aussi le trou 5. C'est la position de la surface 2' du surmoulage 2, extérieure aux débouchés de tous les chemins de fuites éventuels à travers ce trou 5, qui assure avantageusement cette complète étanchéité.

Sur la figure 1, il apparaît que la bague 1 comprend, entre les parties 4 et 10 de cette bague, un épaulement annulaire 12 enrobé sur toute sa surface par la matière de surmoulage 2. Ainsi, cet épaulement annulaire 12 écrase une partie annulaire du surmoulage 2 placée en retour sur cet épaulement, contre la surface 9 de la paroi 6, lors du vissage de la pièce dans le trou 5, cet épaulement renforçant ainsi l'étanchéité du joint ainsi constitué.

Le surmoulage 2 étant évidemment inséparable de la bague 1, il apparaît ainsi que l'on a atteint tous les buts fixés par la présente invention, à savoir fournir une pièce à joint imperdable assurant une étanchéité totale, ceci par l'utilisation d'une technique de surmoulage, de mise en oeuvre peu coûteuse.

On se réfère à la figure 2 du dessin annexé qui représente une variante de la pièce de la figure 1. Sur la figure 2 et les suivantes, les références numériques identiques à des références utilisées à la figure 1 repèrent des éléments identiques ou similaires. La pièce de la figure 2 se distingue ainsi de celle de la figure 1 par la présence d'une surface de butée 13 sur l'épaulement 12, plus proche de l'axe X de la pièce que la surface 2' du surmoulage et de hauteur axiale inférieure à celle de la partie de ce surmoulage 2 en retour sur l'épaulement 12. Lors du vissage de la pièce suivant l'invention dans le trou 5, cette surface de butée 13 vient porter sur la surface 9 de la paroi 5 en limitant ainsi l'écrasement de la partie en retour du surmoulage 2 qui se trouve sous l'épaulement 12. On évite de cette façon une détérioration du joint ainsi constitué sous l'effet d'un serrage exagéré de la pièce dans le trou 5.

Pour renforcer l'étanchéité du montage, on peut prévoir un deuxième joint 14 surmoulé entre la surface de butée 13 et le débouché du trou 5.

La figure 3 représente schématiquement un capteur de température qui constitue une première application de l'invention. Celui-ci peut être monté à travers la paroi 6 d'une enceinte contenant un fluide dont la température est à surveiller, comme c'est le cas, par exemple, du liquide de refroidissement, de l'huile du moteur ou de celle de la boîte de vitesse d'un véhicule automobile.

Le capteur 15 comprend ainsi une bague 1 et un surmoulage 2 qui supporte par exemple une thermistance 16 et ses fils de raccordement 17, 18 à des broches de sortie 19, 20 respectivement, disposées dans un logement 21 qui s'ouvre du côté de la face 9 de la paroi pour transmettre les signaux émis par le capteur. La thermistance est baignée par le fluide présent du côté de la face 7 de la paroi 6 et les fils 17, 18 traversent donc le trou 5 pour rejoindre les broches 19, 20. L'étanchéité du trou est assurée, comme dans les pièces des figures 1 et 2, par l'écrasement sur la face 9 de la paroi 6, de la partie du surmoulage 2 qui passe sous l'épaulement 12.

La surface extérieure de la partie du surmoulage 2 comprise entre le logement 21 et le filetage de la bague 1 peut prendre la forme d'une tête hexagonale, ou plus généralement multi-pans, de boulon, pour permettre le vissage du capteur à l'aide d'une clé.

On a représenté aux figures 4 et 5 un bouchon de vidange de réservoir d'huile de moteur ou de boîte de vitesse de véhicule automobile. On sait qu'un tel bouchon comprend couramment une partie aimantée capable de retenir toute particule métallique présente dans l'huile, dont la mise en circulation pourrait détériorer le circuit de cette huile.

Sur la coupe axiale de la figure 5, le bouchon est vissé sur la paroi 6 du réservoir d'huile ; il apparaît que ce bouchon comprend, comme les pièces des figures 1 à 3, une bague 1 et un surmoulage 2 qui traverse la bague 1 pour déboucher dans l'huile du réservoir, du côté 7 de la paroi 6. C'est l'extrémité 22 du surmoulage 2 débouchant dans cette huile qui recueille les particules métalliques portées par l'huile. Pour ce faire, la matière d'enrobage peut être constituée par une matière aimantée moulable telle que, par exemple, de la "plastoferrite".

Extérieurement, le bouchon prend la forme représentée à la figure 4, et comprend une tête multi-pans de manière à pouvoir être serré ou desserré classiquement à l'aide d'une clé.

Bien entendu, l'invention n'est pas limitée aux modes de réalisation décrits et représentés qui n'ont été donnés qu'à titre d'exemple. C'est ainsi que l'invention n'est pas limitée à sa mise en oeuvre à un capteur de température et pourrait tout aussi bien être mise en oeuvre dans un capteur de pression ou de toute autre grandeur physique caractéristique d'un fluide contenu dans un réservoir. Comme le montre l'application illustrée aux figures 4 et 5, elle s'étend aussi à toutes les pièces destinées à être vissées sur une paroi de réservoir de fluide, en particulier quand ces pièces comportent au moins deux parties présentant une interface traversant la paroi.

## Revendications

1. Pièce vissante munie d'un joint solidaire assurant l'étanchéité d'un trou fileté (5) percé dans une paroi (6) recevant ladite pièce, caractérisée en ce qu'elle comprend a) une bague (1) comportant un filetage extérieur (3) complémentaire de celui du trou et b) un surmoulage (2) enrobant la bague (1) intérieurement et extérieurement en dehors du filetage (3), le surmoulage (2) présentant, dans un plan perpendiculaire à l'axe du filetage (3), une surface annulaire (2') agencée pour s'appliquer sous pression contre ladite paroi (6), autour du débouché du trou (5), après vissage de la pièce dans ce trou (5), de manière à obturer tout chemin de fuite à travers le trou (5).

2. Pièce conforme à la revendication 1, caractérisée en ce que la bague (1) comporte un épaulement annulaire (12) enrobé par le surmoulage (2), de manière que la partie du surmoulage (2) placée en retour sur cet épaulement (12) soit écrasée entre l'épaulement (12) et la paroi (6), lors du vissage de la pièce dans le trou (5) percé dans ladite paroi (6).

3. Pièce conforme à la revendication 1, caractérisée en ce qu'une surface de butée (13) est prévue sur la bague (1) à proximité dudit épaulement (12), cette surface de butée (13) étant agencée pour s'arrêter sur ladite paroi (6) de manière à limiter l'écrasement d'une partie annulaire du surmoulage formant joint, lors du vissage de la pièce dans le trou (5).

4. Pièce conforme à l'une quelconque des revendications 2 et 3, caractérisée en ce qu'elle comprend un deuxième joint annulaire (14) monté sur la bague (1) pour renforcer l'étanchéité de la paroi (6) entre le filetage du trou (5) et celui de la bague (1).

5. Pièce conforme à l'une quelconque des revendications 1 à 4, caractérisée en ce que le surmoulage (2) comprend une partie conformée pour être agrippable par un outil de serrage de la pièce dans le trou fileté (5).

6. Pièce conforme à la revendication 5, caractérisée en ce que ladite partie du surmoulage prend la forme extérieure d'une tête de boulon multi-pans.

7. Pièce conforme à l'une quelconque des revendications 1 à 6, caractérisée en ce que le surmoulage (2) supporte, d'un côté de la paroi (6) sur laquelle la pièce est vissée, un capteur (16) d'une grandeur représentative du milieu situé du côté de cette paroi (6) et, de l'autre côté de celle-ci, des moyens (19,20) de transmission du signal émis pas le capteur (16).

8. Pièce conforme à la revendication 7, caractérisée en ce que ladite grandeur est la température ou la pression du milieu.

9. Pièce conforme à l'une quelconque des revendications 1 à 6, caractérisée en ce qu'elle est conçue pour fermer un orifice de vidange d'huile de moteur ou de boîte de vitesse de véhicule automobile.

10. Pièce conforme à la revendication 9, caractérisée en ce que la matière du surmoulage (2) est aimantée.
